# EUROPEAN PATENT APPLICATION

(11) **EP 4 160 388 A1**
(43) Date of publication of application: **05.04.2023**
(21) Application number: 21199725.9
(22) Date of filing: 29.09.2021
(51) Int. Cl.: G06F 8/20, G06F 8/30

(54) **METHOD AND SYSTEM FOR THE DEFAULT OF A SUITABLE ARCHITECTURE MODEL**

(71) Applicant: Deutsche Telekom AG, 53113 Bonn (DE)
(72) Inventor: RADOMSKI, Sabine, 04420 Markranstädt (DE)
(74) Representative: Blumbach · Zinngrebe Patentanwälte PartG mbB

(57) **Abstract**

The invention relates to a method and a system for defaulting an architecture model to be used within the context of a process to be controlled by use of a computing device employing fuzzy-logic, wherein a plurality of different specified process characteristic values is stored in a computing device and respective one software architecture is allocated to each of the different specified process characteristic values. Furthermore, a plurality of process parameters representing different process framework conditions of a process to be controlled is inputted into the computing device and a target process characteristic value is determined, by means of the computing device employing the fuzzy-logic, as a function of the process parameters on the basis of deposited fuzzy-sets describing linguistic variables, which divide each of the process framework conditions as a linguistic input variable into different classes, whereby a respective class allocation for each process parameter is determined by use of the fuzzy-logic and each of the process parameter is weighted as a function of the respective class allocation according to a set of control rules deposited within the computing device for the determination of the target process characteristic value. Then, from the plurality of software architectures, a software architecture is selected as architecture model to be defaulted, by the computing device, that has the allocated specified process characteristic value being next to the determined target process characteristic value, in particular being identical to the determined target process characteristic value.

## Description

The invention relates to a method for the default of an architecture model to be used for a process to be controlled, in particular concerning the implementation or execution of a certain project, especially for a specific product to be developed or produced, by means of a computing device employing fuzzy-logic, in particular adapted for fuzzy-based controlling the default of the architecture model even due to competing process parameters, as well as to a system suitable for such a default of an architecture model.

It is well known that software, especially for a process to be controlled, in particular concerning the implementation or execution of a certain project, especially for a specific product to be developed or produced, is basically structured in an architecture to separate solutions for individual tasks and to be used again in other systems. This exploits the intangible property of the software that allows easy copying of program code and a clear definition and delimitation of the solutions facilitates the reuse. In principle, software architectures may be compared with architectures of construction art. There exist software with simple software architecture, which corresponds quasi to the basic architecture model for the architecture of a townhouse for example, such as software architecture for the realization of a calendar, a messenger, a notebook and/or a QR scanner, or with more challenging software architecture, similar to a basic architecture model for a villa, such as software architecture for the realization of an online shop, a navigator, a book loan system and/or a fitness app. In the complexity still more powerful software architecture, comparable with a architecture model for a building from Hunderwasser, is necessary for example for the realization of a process to be controlled for a CRM system (Customer Relationship Management System), an SAP system and/or a smart city system, and very complex software architecture, comparable with a architecture model for an industrial plant, is such as for example for the realization of Harbor control for the city of Hamburg, a robot control and/or a drone control.

Usually, the structure and freedom of implementation or execution of a certain project, especially for a specific product to be developed or produced, i.e. in particular for the control of the process concerning this project, can be significantly influenced by a respective software architecture or the underlying architecture model. The various software architectures (and hence of architecture models) on which process control can based, differ for example in the number of layers conceptually assigned to the respective functions, the number of objects that can be organized, and the granularity of the respective objects, and can also be divided into business-oriented and structure-oriented architecture models.

This however, results in differences concerning to the characteristics profiles of the several architectures, in particular also with regard to their flexibility an manageable complexity, so that respective process control based thereon are differently suited for the execution or implementation of large and small, dynamic and static as well as independent and cooperative projects. As examples of different software architectures (and hence of underlying architecture models) the following can be mentioned: AOA (Agent Oriented Architecture), Blackboard (task/process oriented Architecture), BOA (Business Oriented Architecture), C2 (Multi tier Architecture), CBA (Component Based Architecture), CCSOA (Consumer-Centric Service-Oriented Architecture), CORBA (Common Object Request Broker Architecture), CS (Client Server), DDA (Data Driven Architecture), DCA (Data Centered Architecture), DCE (Distributed Computer Environment), DDA/DDD (Domain Driven Architecture / Domain Driven Design), DWA (Data Warehouse Architecture), ECA (Edge Computing Architecture), EDA (Event Driven Architecture), MDA (Model Driven Architecture), MSA (Micro Service Architecture), MVC (Model View Controller), MVP (Model View Presenter), OOA (Object Oriented Architecture), Peer2Peer (network architecture), Pipe and Filter, RA (Repository Architecture), RPM (Remote Presentation Model), SOA (Service Oriented Architecture).

According to the applicant's is knowledge, up to now aspects of an optimal organization and selection of software architectures are concerned. Also the automatic selection of an architecture model by means of fuzzy-logic is described occasionally, whereby however on the one hand only a small selection of the possible architectures is considered and on the other hand essentially exclusively quality criteria for the selection are used.

According to the ISO/IEC 25000ff valid at the date of this application, such quality criteria are in particular performance, compatibility, usability, reliability, security or safety, maintainability, portability and functional suitability. Depending on the specific application and other general or framework conditions, these or other quality criteria will be taken into account in different ways and their characteristics will also have a fundamental influence on the selection of an architecture to be used as far as possible for the execution or implementation of a project, in particular on the selection of a software architecture to be used for a specific software for this purpose. As a result however, only a few steps in software engineering are automated up to date.

As mentioned at the beginning, software has some exciting properties because it is immaterial. However, this also influences software engineering or software programming itself. Each kind of software -even so-called standard software- is usually programmed or developed only once for the execution or implementation of a project. However, this also means that for the execution or implementation of each new project, often a corresponding software has to be programmed or developed, based on the prior selection of the best possible software architecture.

As a result, the selected software architecture on which the software is based will also influence the finished product, e.g. in its structure, quality, flexibility, adaptability and/or degrees of freedom. If a project concerns e.g. the development of a new software, a new car, a new building, a new factory, a new production line or a new automation process, to name just a few examples, it should therefore first be started with the analysis of the framework conditions and, based on this, a software suitable for the execution or implementation of the project and to be applied accordingly should be selected.

Even though the selection of a suitable software and in particular its software architecture or underlying architecture model can be supported by various tools, decisions have to be made on the basis of mostly incomplete and imprecise information. If an unfavorable software is selected, the development may be delayed or the project may fail completely. In the context of the selection of a suitable software many project teams are therefore uncertain, which software architecture to be used for this is the best for a process to be controlled, e.g. concerning to project-related software to be developed. Time pressure and the incomplete information mentioned above also mean that software is often used with a software architecture that is established but does not have an architecture that meets the requirements. The choice of a software that does not use or does not have a suitable software architecture can therefore also cause economic damage and/or the project as a whole can fail.

It is an object of the present invention to provide or define an approach of a system and method, according to which an architecture model, in particular a software architecture, can be found or selected that conforms to the requirements for a process to be controlled in particular for the execution or implementation of a project, especially for a specific product to be developed or produced. In particular, to provide or define an approach of a system and method, with which an automatic default, in particular even adaptive default, of an architecture model is enabled on the basis of predeterminable requirements and different objectives.

According to the present invention, solutions to this object are given by the subject matters of appended claims, in particular by a method and a fuzzy-control-system according to the features of claim 1 or 6 and with various preferred embodiments provided by the features of the dependent claims. The object is further solved by the use of a fuzzy control system according to claim 11 and a computer readable medium according to claim 12.

Accordingly, the invention proposes a method, in particular for defaulting by means of a computing device employing fuzzy-logic an architecture model to be used for a process to be controlled, in particular concerning the implementation or execution of a certain project, especially for a specific product to be developed or produced, according to which to each of a plurality of different specified process characteristic values, stored or storable in a computing device employing fuzzy-logic, respective one software architecture is allocated. A target process characteristic value is determined as a function of process parameters, inputted into the computing device and representing different process framework conditions of a process to be controlled, and on the basis of deposited fuzzy-sets describing linguistic variables, which subdivide or break down each of the process framework conditions as a linguistic input variable into different classes. In this regard, a respective class allocation for each process parameter is determined by use of the fuzzy-logic and each of the process parameter is weighted as a function of the respective class allocation according to a set of control rules deposited within the computing device for the determination of the target process characteristic value. Then, from the plurality of software architectures, a software architecture having the allocated specified process characteristic value being next to the determined target process characteristic value, in particular being identical to the determined target process characteristic value, is selected by the computing device as the architecture model to be defaulted for the use in the process to be controlled, in particular concerning the implementation or execution of a certain project, especially for a specific product to be developed or produced.

Thus, because the process framework conditions are described on the basis of deposited fuzzy-sets as linguistic input variables for their subdivisions or breakdowns in different classes, and each process parameter representing one process framework condition is subsequently weighted as a function of its respective class allocation determined, with the inventively used fuzzy-logic the selection and default of a most suitable architecture model is automatically controllable even on the basis of several different, even competing process framework conditions and hence, competing process parameter.

Accordingly, the invention furthermore proposes a fuzzy-control-system, in particular for defaulting an architecture model to be used for a process to be controlled, in particular concerning the implementation or execution of a certain project, especially for a specific product to be developed or produced, comprising a computing device employing fuzzy-logic having fuzzy-sets describing linguistic variables dividing several process framework conditions as linguistic input variables into different classes, and a set of control rules deposited within the computing device, in particular an adaptable set of control rules. The fuzzy-control-system is designed for storing a plurality of different specified process characteristic values in the computing device and for allocating in the computing device respective one software architecture to each of the different specified process characteristic values, and for receiving in the computing device a plurality of process parameters representing different process framework conditions of a process to be controlled.

The inventive fuzzy-control-system is furthermore designed for determining, by employing the fuzzy-logic, a target process characteristic value as a function of the process parameters, specifically by determining on the basis of the fuzzy-sets a respective class allocation for each process parameter and by weighting each of the process parameter as a function of the respective class allocation according to the set of control rules for the determination of the target process characteristic value, and for selecting from the plurality of software architectures a software architecture having the allocated specified process characteristic value being next to the determined target process characteristic value, in particular being identical to the determined target process characteristic value as architecture model to be defaulted for the use in the process to be controlled, in particular concerning the implementation or execution of a certain project, especially for a specific product to be developed or produced.

Thus, important advantages can be seen, that it is enabled, by use of the fuzzy-logic, for the first time to default an appropriate or most suitable architecture model, based on a determination of software architecture depending on the calculation of a target process characteristic value resulting from process framework conditions of a process to be controlled, even on the basis of incomplete and inaccurate information and thus in particular also among each other competing and/or dependent process parameters, that is complying with the requirements to the process to be controlled, in particular concerning the implementation or execution of a certain project, especially for a specific product to be developed or produced. In particular it is furthermore enabled to perform automatically, especially even adaptively, the default of such an architecture model to be used on the basis of predeterminable project requirements and different project objective involved by the process. This incomplete and inaccurate information and thus in particular also among each other competing and/or dependent process parameters are evaluated by means of the fuzzy logic, i.e. in particular the fuzzy sets and the stored set of rules, and subsequently the optimal architecture model is determined based on a plurality of stored software architectures.

Consequently, the appropriate or most suitable architecture model can already be determined at the beginning of a process, i.e. in particular concerning the execution or implementation of a project, especially for a specific product to be developed or produced. Accordingly, based on this determined appropriate or most suitable architecture model, even an optimal process control software to be used within the context of the process to be controlled can be easily selected as the appropriate or most suitable software architecture in principle corresponds to the defaulted architecture model deriving from the determined as target process characteristic value, even if some process parameters are not yet known.

Because of the possible use of a wide variety of process parameters, it is hence possible to identify for each process respective required process parameters and to subsequently determine a most suitable architecture model.

Consequently, the invention provides a tool that can be used to automatically determine, in particular select, a most suitable architecture model even on the basis of different and competing process parameters. And a respective determined target process characteristic value thus is representing quasi a requirement profile to a software architecture and a respective specified process characteristic value is representing quasi a property profile of the allocated software architecture and hence of a required underlying architecture model.

According to useful embodiments, the fuzzy-logic, i.e. in particular the fuzzy-sets and/or the deposited set of control rules, are adjustable to respective specific processes and specific process framework conditions related thereto, e.g. by modifying the respective variables. By employing the technology of fuzzy-logic, it is thus for the first time in automatic manner an individual selection of a most suitable architecture model enabled, i.e. in particular of a architecture even complying with the technical requirements to a process control, e.g. a process control software, for the execution or implementation of a project within a process to be controlled, based on the respective process infrastructure at hand, even in the case of a dynamically changing process infrastructure, in particular one that can be specified by the framework conditions.

In particular, in order to be able to react even more flexibly to dynamically changing framework conditions, at least one process parameter of the plurality of process parameters can be employed as a guiding value during the step of determining. Such guiding value can be for example predetermined within the computing device prior to the step of determining process parameter or selectable, e.g. by means of a selection unit, and with the set of control rules in particular being adaptable to such guiding value.

Further features of the inventive subject matter and advantages achieved therewith are described below considering preferred embodiments based on the encompassed drawings, in which is respectively showing in an abstract sketch:
- Fig. 1: a generalized schematic diagram of a fuzzy-controller as a base for a computer unit using a fuzzy-logic according to the inventive fuzzy control system,
- Fig. 2: preferred input variables for a first fuzzy-based component of the computer unit according to the inventive fuzzy control system,
- Fig. 3a, 3b: preferred input variables for further fuzzy-based components of the computer unit according to the inventive fuzzy control system,
- Fig. 4: a simplified sketch of a fuzzy control system with several fuzzy-based components,

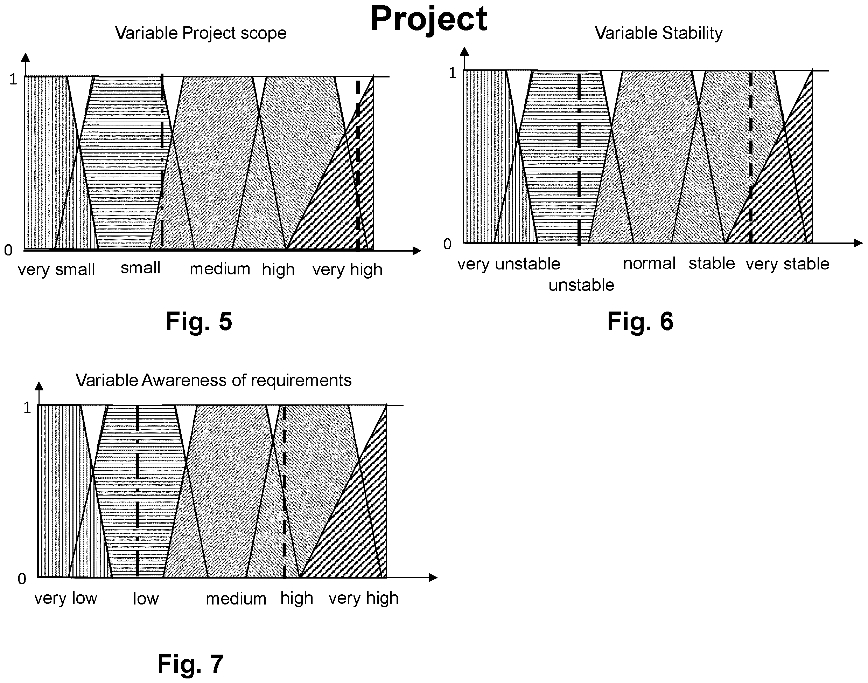

- Figs. 5 to 17: based on an example of a process possible within the scope of the invention concerning to a project relating to project objective several useful fuzzy-sets comprising a variable "Project scope", a variable "Stability", a variable "Awareness of requirements", a variable "Documentation", a variable "Existing documentation", a variable "Organization", a variable "Spatial distribution", a variable "Team experience", a variable "Teams size", a variable "Expert knowledge", a variable "Independence", a variable "Economic criticality" and a variable "Safety requirements" as examples of linguistically described variables that can be assigned to a respective process as process framework condition to illustrate various embodiments of a fuzzy control system according to the invention,
- Figs. 18, 19: useful fuzzy sets in relation to a variable "Output value Complexity" and a variable "Output value Flexibility" as further examples of linguistically described variables that can be assigned to a respective process to illustrate various embodiments of a fuzzy control system according to the invention,
- Fig. 20: an exemplary mapping scheme concerning to determined target process characteristic values and stored specified process characteristic values with respective allocated software architectures on the basis of which an architecture model to be defaulted can be finally selected,
- Figs. 21, 22: basic sketches of preferred exemplary embodiments of a method according to the invention for regulating the allocation of resources to several software applications which form a group, based on several fuzzy-based devices according to a fuzzy control system according to the invention, for the selection of a which a software architecture to be defaulted, and
- Figs. 23a, b: an example of classifications of different software architectures, which is shown to be appropriate also as a basis for appropriate fuzzy sets of a fuzzy control system according to the invention, i.e. in particular for the classification of a process to be controlled for the determination of target process characteristic values.

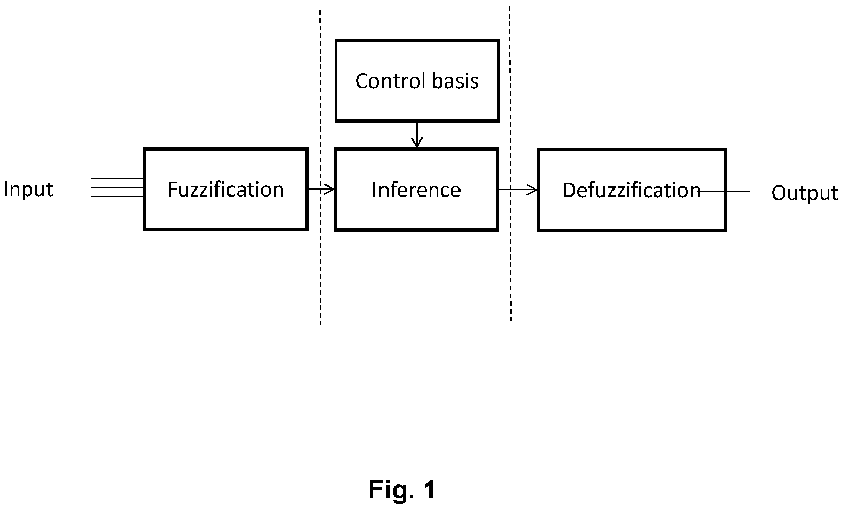

FIG. 1 shows a generalized schematic diagram of a fuzzy controller, the basic principle of which is also used for a computing device employing fuzzy-logic according to the scope of invention. It is known that fuzzy controllers belong to the class of map controllers that correspond to the theory of fuzzy logic. Usually three sub-steps are carried out in each regulation step, i.e. the step of fuzzification, inference and finally the step of defuzzification, whereby the individual inputs and outputs are described as linguistic variables to which fuzzy sets belong.

The fuzzy sets are in turn formed from a set of membership functions, also called fuzzy sets. These membership functions or fuzzy sets are usually preconfigured and can, for example, take the form of a triangle, trapezoid or curve segment (cf. fig. 5 to 19), reference being made in this regard and for documentation of the specialist knowledge of the person skilled in the art in full to the laid-open specification DE 10 2013 008 151 A1, to DE 195 02 230 A1 as well as to DE 10 2021 110 469.6 of present applicant with an application date of Aril 23, 2021. The fuzzy sets arrange the linguistic input variables in "fuzzy" classes and assign to "sharp" input values obtained by measurement or otherwise for the linguistic input variables a class membership value or allocation value between 0% and 100 or according to the figures between 0 and 1.

Correspondingly, "sharp" output values to be output correspondingly for a linguistic output variable can be based on membership functions and can have a membership value or allocation value in relation to the fuzzy class division of 0% to 100%. A fuzzy controller generally determines a manipulated variable to be output from the control difference that is to say from the difference between a set point and a measured actual value, by processing the steps of fuzzification, inference and defuzzification. During fuzzification, fuzzy sets assigned to the input values described by means of linguistic variables are evaluated and values for class allocation are determined. In the step of inference, the rules for calculating the output are specified based on the values for class allocation (control base) and a weighting of the values that are included in the calculation is thereby also determined. In defuzzification, the output values described by means of linguistic variables are assigned to certain membership or allocation functions based on the rules for the calculation and weighting and are determined according to a membership or allocation value. A fuzzy controller is thus a non-linear characteristic diagram or state controller and, in principle, has no internal dynamics.

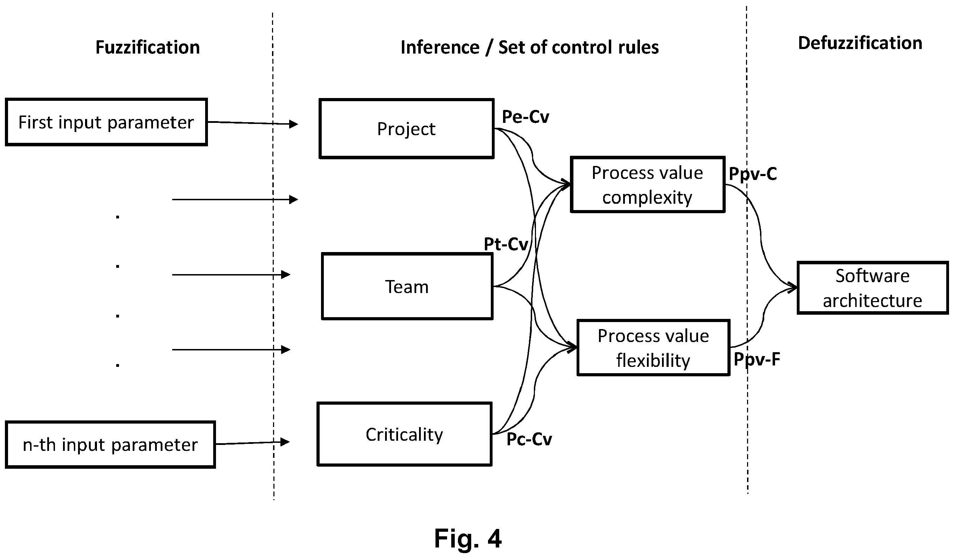

Fig. 4 shows a highly simplified schematic diagram of a fuzzy controller which may be used within the scope of the inventive method and inventive fuzzy control system. The fuzzy control system is thus including a computing device employing fuzzy-logic, expediently based on the principles of a fuzzy controller described above.

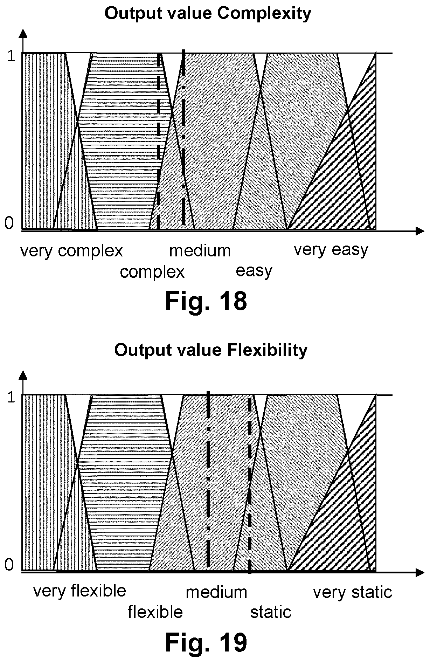

For the purpose of describing linguistic variables, fuzzy-sets, such as depicted in figs. 5 to 19 are deposited, subdividing or breaking down several process framework conditions (figs. 5 to 17) as linguistic input variables into different classes or according to figs. 18 and 19, based on preferred embodiments, subdividing or breaking down further process framework conditions resulting therefrom, i.e. in particular process based requirements based on the inputted several process framework conditions, again as additional linguistic input variables into different classes for a subsequent process classification. Below, these additional linguistic variables are also referred to as process classification variables.

Furthermore, a set of control rules as part of the control base is deposited within the computing device that preferably is adaptable to a guiding value, as described in more detail below.

Such a fuzzy control system can be provided in particular by a combination of suitable hardware and software. Accordingly, the computing device set up according to the invention can also be given in particular by a combination of suitable hardware and software. For example, individual components can also run as software on existing hardware, for example an existing processor. However, hardware can also be provided specifically for individual components. In addition or alternatively, for the method according to the invention, the computing device and/or for the fuzzy control system according to the invention, a computer program may be provided which comprises program code for carrying out the steps of the method according to the invention. Likewise, a computer-readable medium, e.g. a CD-ROM or DVD or a USB or flash memory, may be used for this purpose, which comprises instructions which, when executed on a computer having at least one computing device employing fuzzy logic, cause the latter to carry out the method according to the invention. However, such a computer-readable medium need not be exclusively a physical medium, but may also be, for example, in the form of a data flow and/or a signal representing a data flow.

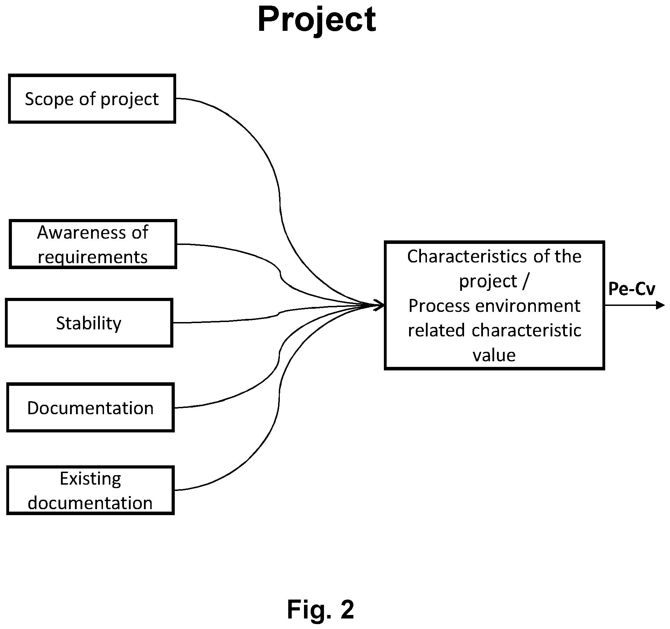

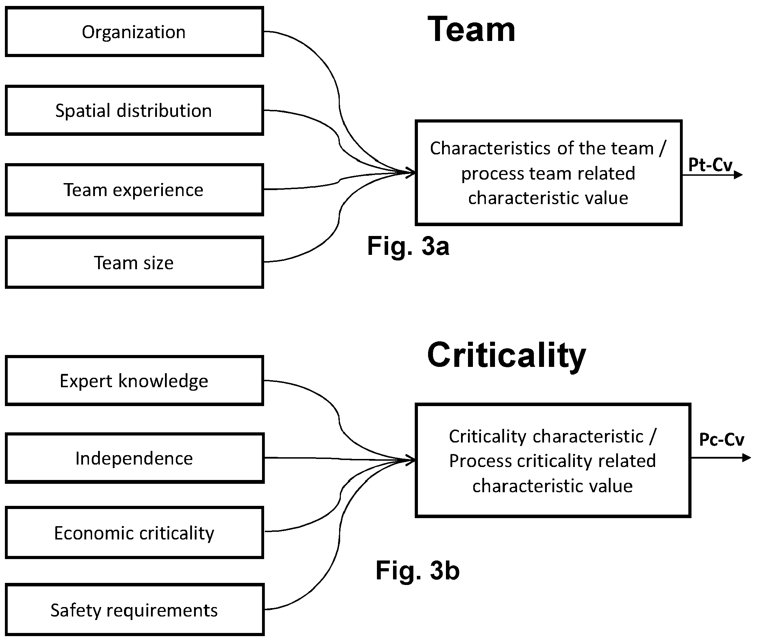

The fuzzy control system, as sketched by fig. 4 comprises, in particular for the default of an architecture model for a software, e.g. a process control software, to be used within the context of a process to be controlled, several fuzzy-based components performing the fuzzification for a first to n-th input value or parameter, especially relating to input variables according to figs. 2, 3a and 3b, and the subsequent inference and defuzzification to determine as the output a software architecture as an architecture model to be defaulted, i.e. in particular to default an architecture model most suitable to be used for a process to be controlled, e.g. for a software, especially for a process control software, to be used or applied in connection with the execution or implementation of a certain project.

The fuzzy control system is set up especially, fort he inputting or receiving as input values a plurality of process parameters representing different process framework conditions of a process to be controlled. Process framework conditions may be within the scope of the invention in particular conditions relating to the process environment, to the process team and/or to the process criticality, referred to by fig. 4 as project, team or criticality. For these or even further groups, respective process parameters may be defined as input values and subsequently be evaluated and combined. Thus, the different process framework conditions are preferably at least partially technical process framework conditions and hence, even the process parameters are at least partially technical process parameters The result of these groups is then again combined by means of the fuzzy-logic and the set of control rules deposited and a value characterizing the process, hereinafter and in the claims also referred to as target process characteristic value, is determined as output value. By use of this output value the architecture model to be defaulted is selected, i.e. in particular a architecture model complying with or at least mostly complying with the requirements to a corresponding process control for the execution or implementation of a project within the context of a process to be controlled. This selection in particular is taking into account a plurality of different specified process characteristic values previously stored in the computing device, wherein to each of the different specified process characteristic values respective one software architecture is allocated in the computing device.

Based thereon, i.e. based on the appropriate or most suitable software architecture, i.e. the software architecture complying or mostly complying with the requirements, already at the beginning of a process to be controlled an optimally applicable architecture model to be defaulted may be selected, even if some process parameters are not yet known.

Thus, specific process framework conditions can be adjusted, in particular by modifying the respective input values by selecting other input values, and/or the entire fuzzy control system can be adjusted to different specific process framework conditions by modifying the respective variables.

FIG. 2 shows preferred process parameters used as input values within the scope of the invention for a first fuzzy-based component relating to the process environment, in particular for firstly determining of a process environment related characteristic value Pe-Cv, i.e. especially relating to the characteristics of certain project to be executed or implemented (Characteristics of the project). Fig. 3a shows preferred process parameters used as input values for a second fuzzy-based component relating to the process team, in particular for firstly determining of a process team related characteristic value Pt-Cv, i.e. especially relating to the characteristics of the team deployed or required for a certain project to be executed or implemented (Characteristics of the team). Fig. 3b shows preferred process parameters used as input values for a third fuzzy-based component relating to the process criticality, in particular for firstly determining of a process criticality related characteristic value Pc-Cv, i.e. especially relating to the characteristics of the criticality of a certain process to be executed or implemented (Criticality characteristic).

Thus, according to Fig. 2, preferred process parameters used as input values and relating to the process environment may include:
Scope of project: The scope of project is defined for example by the costs and the development duration (time) of the project as well as the complexity, the quality and the amount of the functions to be realized. A corresponding fuzzy-set deposited for describing the linguistic variable in that respect, i.e. a variable "Project scope", is sketched in fig. 5. The variable "Project scope" thus influences even the number of objects, for the handling or organization of which the underlying architecture to be used should be able and preferably must be able, and the granularity of respective objects. The variable "Project scope" thus influences significantly at least the complexity of the process to be controlled.

Awareness of requirements: This can be used, for example, to express the extent to which the requirements for the finished product are known. By the linguistic variable in that respect, as shown by the fuzzy-set of fig. 7, also the quality of the requirements formulated or specified is involved. In case of incomplete and contradictory requirements, a low value should be selected. If complete and specific requirements are available, then a high value for this variable should be selected. Hence, the process parameter in this respect, especially in-puttable process parameter, can preferably represent even a desired project result. A variable "Awareness of requirements" thus influences significantly the process-related or process-dependent requirements to the architecture, in particular the process-related or process-dependent requirement-profile in respect to the required flexibility of the architecture.

Stability (especially externally based): Within a dynamic environment (economy, political and social changes) having a multiplicity of changes or modifications, the environment usually is more instable and a corresponding value should be selected for the input. This variable also describes the stability to be expected with respect to the requirements. With a linguistic variable related thereto, as sketched by the fuzzy-set of fig. 6n, stability or instability caused by conditions external to the project consequently, can also be taken into account. For example, the more often a customer participates to the project history, the more instable are the project conditions. The stability of the project thus influences significantly the process-related or process-dependent requirements to the architecture, in particular the process-related or process-dependent requirement-profile in respect to the required flexibility of the architecture and hence, in particular to the adaptability of the architecture to changing or evolving circumstances.

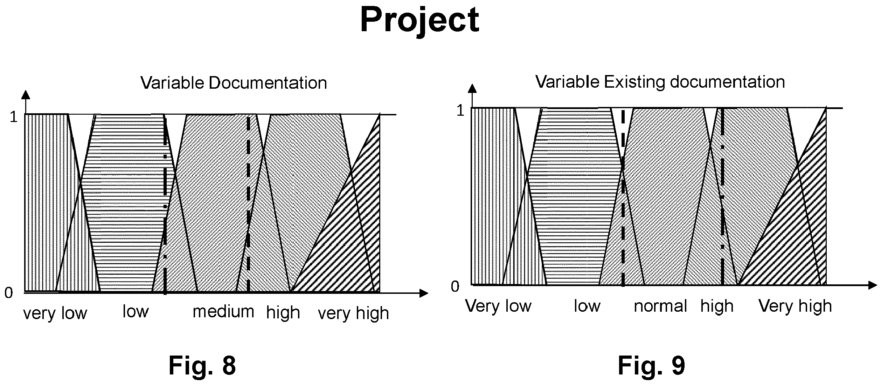

Documentation: With a process parameter related thereto, by use of a corresponding linguistic variable, as sketched e.g. by fuzzy-set of fig. 8, the importance and scope of documentation in the project may be described.

Existing documentation: Usually, there are different levels of documentation for subsequent projects, both in terms of scope and quality. These must therefore usually also be taken into account in the course of a certain project, i.e. in the process under consideration, as they could also define possible architectures models. The more comprehensive and specific the documentation available from former projects is, the more should be the influence to the selection of the architecture to be defaulted. A corresponding fuzzy-set deposited for describing a linguistic variable in this respect is sketched for example by fig. 9.

Thus, even the two last-mentioned variables influence the process-related or process-dependent requirements to the software architecture and in this regard in particular with respect to a required flexibility of the software architecture and thus, also of the architecture model to be defaulted.

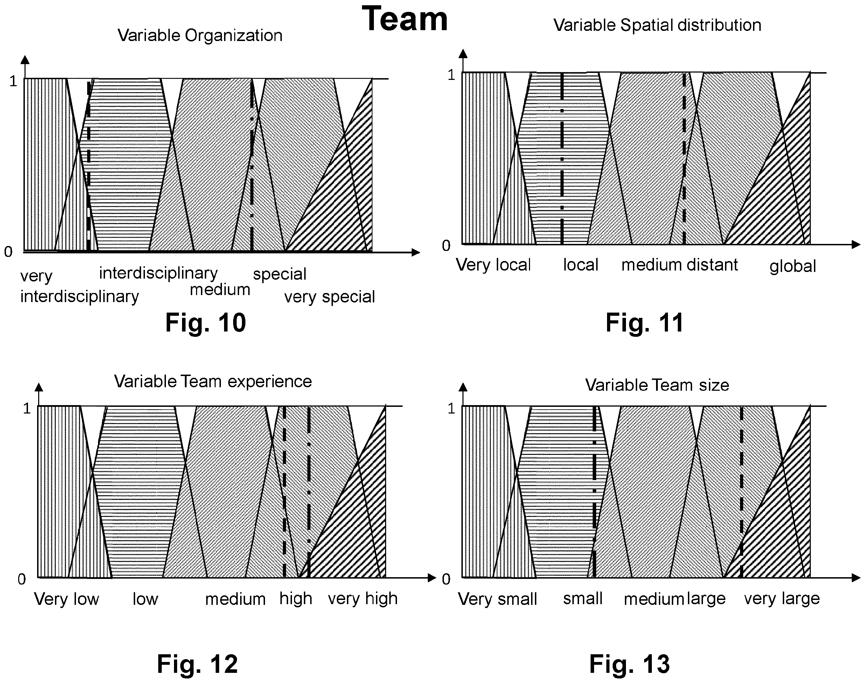

Preferred process parameters used as input values and relating to the process team are exemplarily depicted in fig. 3a and may include:
Organization: This parameter or the respective linguistic variable (see fig. 10) is allocated to the group "Team" relating to or describing the characteristics of the team. The more homogeneous the expertise in the team (e.g. a development team and a test team are different teams and/or a team can be located in different organizational units of the company) the more specific is usually the organization of the team and in an interdisciplinary team, e.g. testers and developers work together in one team. Thus, a corresponding value or parameter should be specified.

Spatial distribution of the team: A team can work in one organizational unit and still be spatially separated. In the case of spatial distance, communication within the team is affected and can therefore also be taken into account appropriately and may be usefully also integrated with regard to the selection of the software architecture to be defaulted. By use of a corresponding variable, (see for example fig. 11) a respective value can be specified for the spatial distribution of a certain team.

Team experience: If a team already knows many different processes to be controlled, in particular also including several different softwares, especially their different underlying architectures, e.g. for the development of a software, and has already worked with different architecture models, the higher to be estimated is usually the team experience (see for example fig. 12) .

Team size: One process parameter that can be applied in relation to this variable (see also Fig. 13) is related, for example, to the size of the project: the larger the project, the larger the team. The smaller the team, the more agile the team can work. However, the latter must also presuppose greater flexibility of the architecture model.

The aforementioned process parameters relating to the process team therefore also generally have an influence to the process-related or process-dependent requirements with regard to the architecture, in particular to the complexity to be managed by and/or the required flexibility of the architecture model to be defaulted.

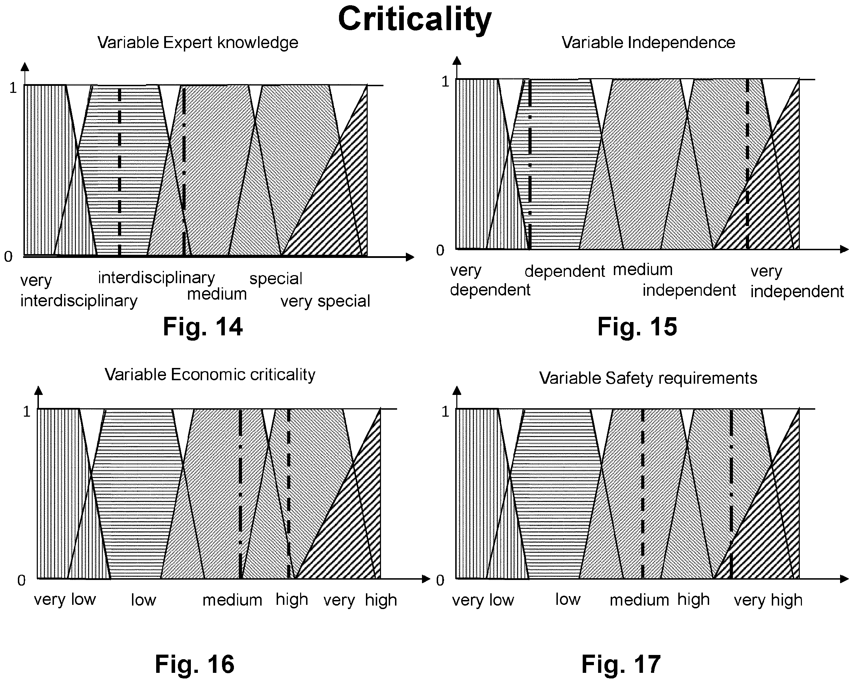

Preferred process parameters used as input values and relating to the process criticality are exemplarily depicted in fig. 3b and may include:
Expert knowledge: The more specific the required expert knowledge (e.g. special knowledge regarding the field of application for a product to be developed) the higher the criticality for linguistic variable in this respect (see for example fig. 14) has to be estimated.

Independence: If, for example, other projects, other software and/or their components have to be taken into account in relation to each other during the execution or implementation of a project, i.e. within the process to be controlled, especially for a specific of a product to be developed or produced, the higher the dependency of the project as a rule (see also fig. 15). The more independent the project, the fewer relationships to other software, other projects and/or their components must be considered during the process. A high cohesion and dependency of the components requires for example a process control, which is based on a classical architecture model.

Economic criticality: The function of a product can also have different effects on the profitability, e.g. of a company. An online store, for example, often has a higher criticality than a website with the information of a canteen, for example (see also fig. 16).

Safety requirements: Based on a process parameter representing the safety requirements for a process, i.e. in particular for a project to be executed or implemented, can be estimated or build up by use of a corresponding linguistic variable and/or can be estimated or build up for a product to be developed (see also fig. 17). The area of application for the product can also be taken into account. It can be considered, for example, that a calendar in a safety-critical environment must also meet the requirements of this environment.

Thus, even the aforementioned process parameters relating to the process criticality therefore also generally have an influence to the process-related or process-dependent requirements with regard to the software architecture, in particular to the complexity to be managed by and/or the required flexibility of the architecture model to be defaulted.

In summary and in particular based on the above referenced different process framework conditions, the process framework conditions and hence, even the process parameters are at least partially technically, preferably most of them.

Preferably, the control of the system according to the invention is designed furthermore, that at least one or even more of the process parameter representing the different process framework conditions is used as a guiding value, in particular a process parameter representing a desired process result, preferably a process parameter that can be individually inputted. If the desired process result is for example a new software to be developed, usually there is the need of a different weighting and a different selection of a most suitable architecture to be defaulted than in case of for example a new car to be developed, an industrial hall, even if all further framework conditions might be identical. As such a process parameter the above described "Awareness of requirements" for example, can be usefully served. However, depending on the respective certain process and/or process framework conditions within the scope of invention in principle each other process parameter can be selected or predetermined for the use as guiding value. The system accordingly, has an appropriate selection device set up for this purpose.

As a function of the process parameters, preferably also based on a process parameter used as guiding value, the inventive control system is furthermore adapted or designed, for determining, by employing the fuzzy-logic, a target process characteristic value, specifically by determining on the basis of the fuzzy-sets a respective class allocation for each process parameter and by weighting each of the process parameter as a function of the respective class allocation according to the set of control rules for the determination of the target process characteristic value. Thereby, as mentioned, a process parameter can be additionally used as guiding value, in particular concerning to the weighting, and/or the set of rules can be adapted, in particular according to a respective guiding value, preferably also automatically.

With the target process characteristic value it becomes apparent, how an software architecture should be construed, for example how flexible the architecture has to be and/or to what extent even complex processes must be controllable by the software architecture, and hence can be applied to the selection of the architecture model to be defaulted.

Hence, a respective determined target process characteristic value thus is representing quasi a requirement profile to an architecture model, in particular for a software architecture and a respective specified process characteristic value is representing quasi a property profile of the allocated software architecture.

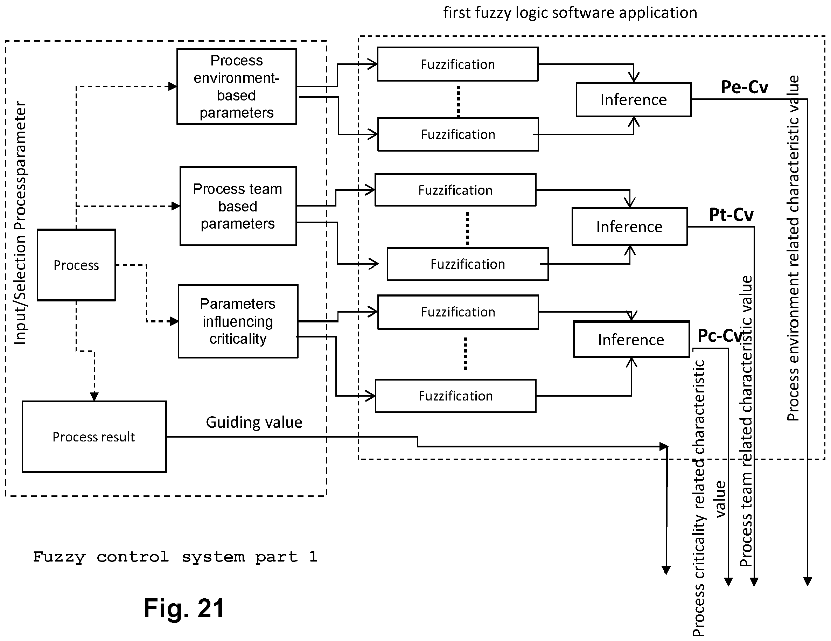

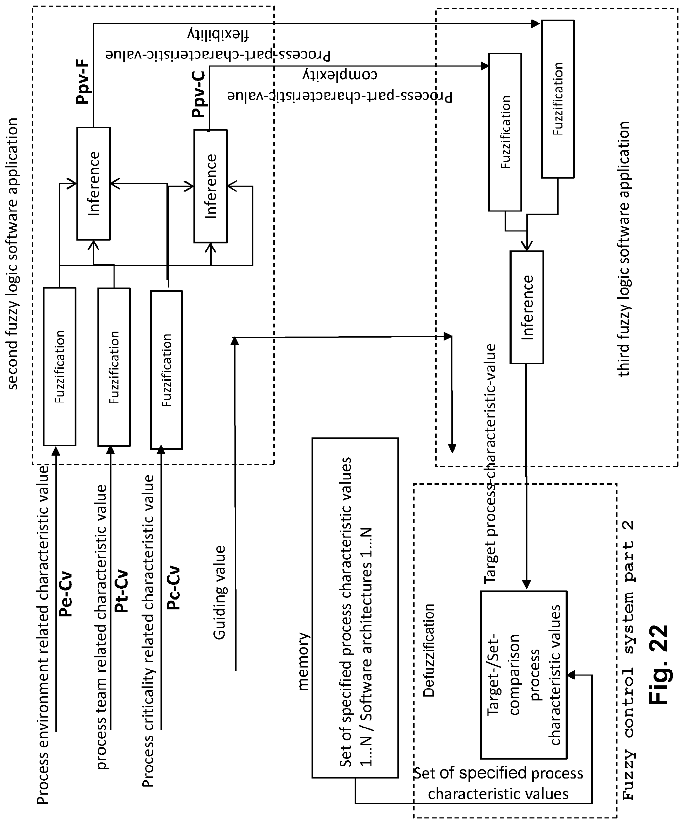

As sketched by figs. 21 and 22, the control system preferably is designed for storing a plurality of different specified process characteristic values "1...N" in the computing device and for allocating in the computing device respective one software architecture "1...N" to each of the different specified process characteristic values "1...N", so that from the plurality of software architectures, in particular during the defuzzification (see fig. 4 for example), the software architecture can be selected as architecture model to be defaulted for the use in the process to be controlled that has the allocated specified process characteristic value being next to the determined target process characteristic value, in particular being identical to the determined target process characteristic value.

The specified process characteristic values, which representing quasi a property profile of the respectively allocated software architecture, become the more specific, the more properties are taken into account. Therefore, the specified process characteristic values are preferably determined by classifications of the software architectures made in advance, in practical implementation preferably at least also with regard to their controllable complexity and enabling flexibility.

Such a classification can be performed within the scope of the invention preferably on the basis of the number of layers conceptually encompassed by a given software architecture, the number of objects that can be organized and the granularity of these objects. However, even further properties, such as in particular business-oriented or structure-oriented alignment of the architecture and/or safety aspect considered with the architecture are suitable for such a classification. Expediently, each result of such a classification is thus reflected by respective one specified process characteristic value or is graded thereby.

The property profiles represented by the specified process characteristic values are then decisive for the suitability of the respective allocated software architecture with regard to a process to be controlled, i.e. in particular concerning the implementation or execution of a certain project, especially for a specific product to be developed or produced. Within the scope of invention, a respective suitability thus is reflected in particular also by a respective complexity controllable by the software architecture and a respective flexibility enabled by the software architecture. But even the controllable complexity and enabled flexibility of a software architecture are usually dependent on or the result of further properties, which characterize the software architecture and hence, preferably the result of a further and/or more profound classification.

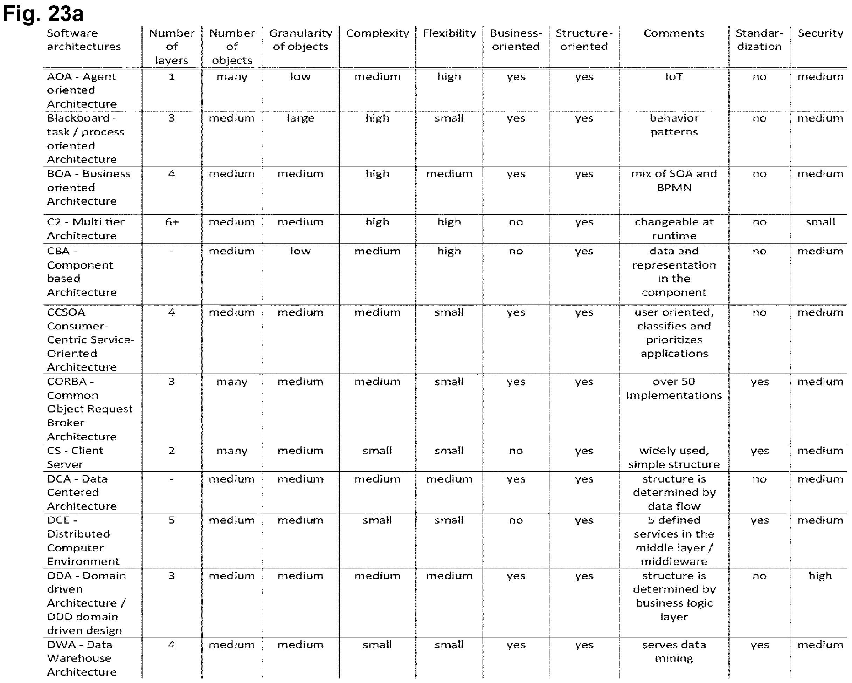

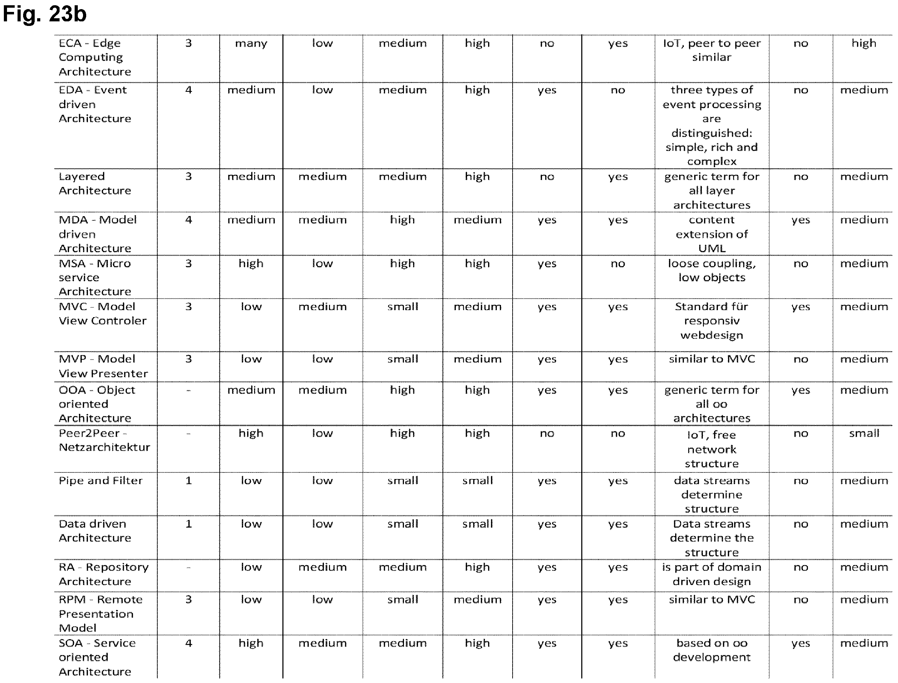

Preferred classifications of several software architectures made for the first time with the invention concerning to their properties, in particular including respective controllable complexity and enabled flexibility, can be taken from the exemplar list according to fig. 23a and 23b.

Such a classification, like for the several software architectures, is preferably again the basis for a corresponding classification of the fuzzy-logic of the control system. Because according to how authoritative are the properties profiles represented by the specified process characteristic values for the suitability of the respective allocated software architecture with regard to a certain process o be controlled, also the several process framework conditions of a certain process to be controlled are authoritative for the requirement profile to a suitable architecture to be defaulted for this process. Like the properties profiles for the software architectures can be represented by the specified process characteristic values, the requirement profiles for the architectures thus can be preferably presented by use of the invention in a corresponding way by the respective determined target process characteristic values.

For the determination of target process characteristic values, the set of rules therefore is preferably established, to perform on the basis of the process framework conditions again a classification in a corresponding way, however with regard to the process to be controlled, i.e., in particular with regard to the requirements to be placed on a suitable architecture, in practical implementation preferably also at least with regard to the process-related complexity and flexibility, i.e., conversely, in particular with regard to the complexity to be controlled or managed by the architecture and the enabling flexibility. Accordingly, by the respective determined target process characteristic value again a respective classification is graded, but now of the process to be controlled or the respective classification result thereto. Hence conversely, the specific requirements to the required architecture to be underlying, i.e. in particular to the architecture model, preferably for a software architecture, and according to the described preferred example in particular in respect to the complexity to be controlled or managed by the architecture to be underlying and the flexibility to be enabled by or required from the architecture to be underlying.

In a particularly preferred embodiment, the computer device with the stored set of rules for determining the target process characteristic value is thus also set up to first perform two different weightings in connection with the weighting of each process parameter and thus for consequently firstly determining a first process partial characteristic value (referred to as "Process value complexity" by fig. 4) and at least one second process partial characteristic value (referred to as "Process value flexibility" by fig. 4) as respective intermediate output values. For each of the process partial characteristic value to be determined an additional linguistic variable subdivided into different classes is provided in the computing device, as exemplarily depicted by the fuzzy-sets according to figs. 18 and 19,

By use of these additional variables for the more extensive classification of the process to be controlled, that are also referred to as process classification variables, a respective class allocation for each of the process partial characteristic values can be determined by employing the fuzzy-logic, i.e. in outlined, practical implementation preferably at least with regard to the complexity (fig. 18) of the process and the flexibility (fig. 19) based on the process and each of the process partial characteristic values can be weighted as a function of the respective class allocation according to the set of control rules for the determination of the target process characteristic value. before a software architecture is selected from the plurality of software architectures as the software architecture having the preferred architecture model to be defaulted. According to the invention, the selected software architecture is the one that assigned, stored specified process characteristic value comes closest to the determined target process characteristic value, in particular corresponds to it.

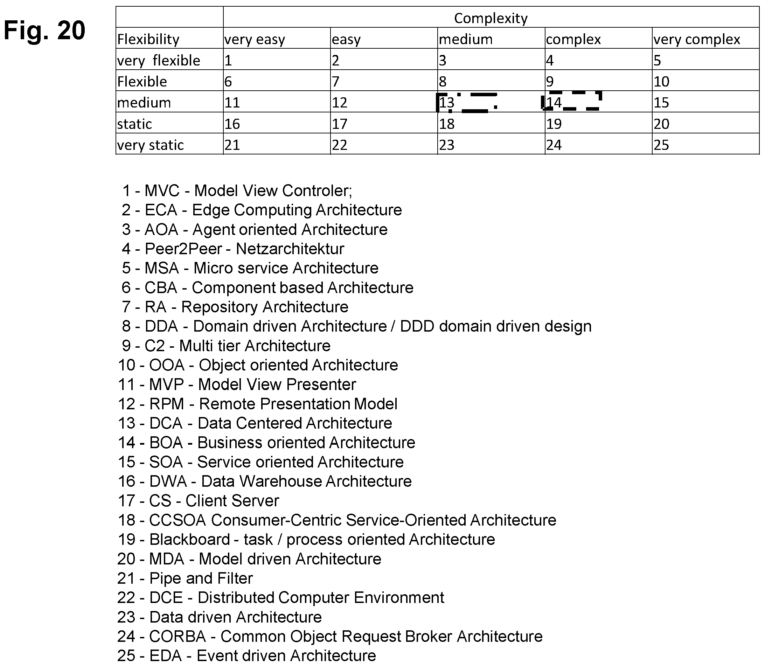

Fig. 20 shows an example of a mapping scheme concerning to the target process characteristic values determined after the weighing of the two process partial characteristic values representing the flexibility and complexity (in the table of fig. 20) for the selection based on this of the software architecture having the preferred architecture model to be defaulted from the plurality of software architectures. Furthermore, for this plurality of software architectures correspondingly deposited specified process characteristic values are listed (below the table of fig. 20) together with the respective allocated software architectures, i.e. in particular based on the classifications according to fig. 23a and 23b.

The fuzzy-logic is preferably set up in such a way that for each determinable target process characteristic value in the table, a corresponding specified process characteristic value is also given.

The software architecture, whose assigned or allocated specified process characteristic value corresponds to the determined target process characteristic value is then selected as the one having the preferred architecture model to be defaulted from the plurality of software architectures. Otherwise, at least the one whose assigned specified process characteristic value comes closest to the determined target process characteristic value is selected.

As a result, the weighting leads to a target process characteristic value, which always corresponds to one of the specified process characteristic values, and thus usually to a respective specific software architecture having the preferred architecture model to be defaulted in each case.

Based on a particularly practical design of a fuzzy control system, a preferred inventive method for defaulting an architecture model, in particular for a software architecture, e.g. for a process control software, to be used within the context of a process to be controlled, in particular concerning the implementation or execution of a certain project, especially for a specific product to be developed or produced, is described below with reference to the basic sketches of fig. 21 and 22. Furthermore, it can be assumed by way of example that a process parameter representing, e.g., a desired process result, in particular a project objective that is at least largely defined via the "Awareness of requirements", is applied as a guiding value

With regard to the basic sketches of fig. 21 and 22, the fuzzy control system being furthermore preferably designed for using a first fuzzy-logic software application running in the fuzzy-logic employing computing device, for determining as a function of received process parameters representing process environment based process framework conditions, process team based process framework conditions and process criticality influencing process framework conditions a respective process environment related characteristic value Pe-Cv, process team related characteristic value Pt-Cv and process criticality related characteristic value Pc-Cv.

Furthermore, the fuzzy control system being furthermore preferably designed for using a second fuzzy-logic software application running in the fuzzy-logic employing computing device, for firstly determining as a function of the process environment related characteristic value Pe-Cv, process team related characteristic value Pt-Cv and process criticality related characteristic value Pc-Cv a first process partial characteristic value representing the complexity Ppv-C of the process to be controlled and a second process partial characteristic value representing the flexibility Ppv-F required for the process to be controlled, and the fuzzy control system being furthermore preferably designed for using a third fuzzy-logic software application running in the fuzzy-logic employing computing device, for determining the target process characteristic value as a function of the first process partial characteristic value and second process partial characteristic value.

For the determination of the respective characteristic values, in particular fuzzy-based components can be used whose modes of operation correspond to those described above in relation to Figs. 2, 3a, 3b and 4.

Upon storing a plurality of different specified process characteristic values "1...N" in the computing device, respective one software architecture "1...N" can be allocated in the computing device to each of (i.e. to respective one of) the different specified process characteristic values "1...N" (fig. 22).The software architectures "1...N" allocated to the specified process characteristic values "1...N" can include the architectures, as listed by figs. 23a and b.

Depending on the specific or certain process, a plurality of process parameters representing different or even competing process framework conditions can be inputted in or received by the computing device and preferably, one of the process parameters selected as guiding value. As described above, the process framework conditions are or can be pre-given usually by the specific process environment, by the specific process team and by the specific process criticality. The process parameters representing different or even competing process framework conditions can be subdivided or grouped accordingly in particular in respective process environment related parameters, process team related parameters and process criticality influencing parameters.

Thereafter, by employing the fuzzy-logic and as a function of at least these process parameters (preferably also depending on the guiding value) the computing device determines a target process characteristic value and selects on the basis of this target process characteristic value the software architecture having the preferred or most suitable architecture model to be defaulted. According to the invention, this is performed by the use of the technology of fuzzy-logic, i.e. via the execution of the steps characterizing a respective fuzzy-logic, i.e. the fuzzification, inference and defuzzification. The fuzzy-logic based control is thus the first time designed for the selection of a software architecture having the preferred or most suitable architecture model to be defaulted, that even on the basis of inaccurate and incomplete process parameters in short time a suitable software architecture, in particular a most suitable or optimal software architecture can be selected, in particular determined, as the software architecture having the architecture model to be defaulted.

According to the invention, by the use of fuzzy-sets describing linguistic variables dividing several process framework conditions as linguistic input variables into different classes, a respective class allocation for each process parameter is determined and each of the process parameter is weighted as a function of the respective class allocation (and preferably also based on a guiding value) by employing the fuzzy-logic according to a set of control rules deposited within the computing device for the determination of the target process characteristic value, with the set of control rules preferably adaptable, in particular adaptable to a guiding value.

Based on the afore described subdivision or grouping in process environment based parameter, process team based parameter and process criticality influencing parameter, first a respective process environment related characteristic value Pe-Cv, a process team related characteristic value Pt-Cv and a process criticality related characteristic value Pc-Cv can be determined within the context of weightings.

In addition or alternatively within the weightings, firstly a first process partial characteristic values Ppv-C representing a complexity to be managed for the processes to be controlled and a second process partial characteristic values Ppv-F representing a required complexity for the processes to be controlled may be determined. Thus, based on the set of rules deposited in the computing device preferably two different weightings are performed concerning the weighting of the process parameters, wherein for each determined process partial characteristic value (or each process partial characteristic value to be determined) an additional linguistic variable subdivided into different classes is deposited in the computing device, such as for example the process classification variables already pointed out above. By employing the fuzzy-logic, then a respective class allocation for each of the process partial characteristic value can be determined and in particular based on the guiding value and as a function of the respective class allocation each process partial characteristic value can be weighted again based on the set of rules deposited within the computing device.

Particularly preferred, for the determination of such process partial characteristic values Ppv-C, Ppv-F, each of the process environment related characteristic value Pe-Cv, the process team related characteristic value Pt-Cv and the process criticality related characteristic value Pc-Cv is respectively fed as input variable to a fuzzy-based component configured accordingly for this purpose.

The characteristics of the respective process to be controlled, i.e. in particular for the execution or implementation of a respective project, consequently determine the input parameters for the fuzzy-based control. In particular, the characteristics of the process, and thus in particular of the project to be executed or implemented, are thus determined by a set of framework conditions, based on which in turn the input parameters for the fuzzy-based control are provided.

If the process to be controlled concerns, for example, the construction of an industrial hall, this represents a complex project. The manufacturer often has a clear idea of the functions that the industrial hall must fulfill even before it is built. Depending on the manufacturing process, the industrial hall has to fulfill different lighting conditions, temperatures, power supply, resistance to chemicals, transport of goods, communication, data acquisition, etc. The industrial hall also has to provide different areas for the production process. Furthermore, there should be different areas in the industrial hall with different requirements. These specifications can be clearly formulated by the client and these specifications/requirements will need little adjustment during the construction of the hall.

Nevertheless, the general conditions for the construction of the hall can change, for example, if the ground conditions were incorrectly estimated and further measures are now required to stabilize the subsoil. There may also be changes in the suppliers of construction materials. On the basis of this scenario, the input parameters for the fuzzy-based control for the default of a software architecture for a process control software to be used within the context of this process to be controlled are determined by corresponding input and then weighted.

The output parameters, indicated by the dashed lines in Figures 5 to 19, are as follows
and relating to the process environment for example:
   - Scope of project: high 0,3; very high 0,8;
   - Awareness of requirements: medium 0,3; high1,0;
   - Stability (extern): stable 1,0; very instable 0,35;
   - Documentation: medium 1,0; high 0,3;
   - Existing documentation: low 0,7; normal 0,7;
and relating to the process team for example:
   - Organization: very interdisciplinary 0,4; interdisciplinary 0,8;
   - Spatial distribution: medium 1,0; distant 0,4;
   - Team experience: medium 0,35; high 1,0;
   - Team size: large 1,0; very large 0,2;
and relating to the process criticality for example:
   - Expert knowledge: interdisciplinary 1,0;
   - Independence: independent 1,0; very independent 0,4;
   - Economic criticality: medium 0,35; high 1,0;
   - Safety requirements: medium 1,0;

Based thereon, as the partial characteristic value representing the required flexibility an output value flexibility (fig. 19) is determined for example being between medium 1,0 and static 0,55 and as the partial characteristic value representing the complexity to be controlled an output value complexity (fig. 18) is determined for example being between complex 1,0 and medium 0,3.

Thus, as indicated in Fig. 20 by the dashed box in the table, for the implementation of the exemplary specified project of an industrial building the software architecture based on a BOA-model is determined with priority for the defaulted architecture model, i.e. a business oriented architecture model is defaulted. The software architecture based on a DCA-model (medium complexity and medium flexibility) or the software architecture based on a Blackboard -model (complex complexity and medium flexibility), i.e. having a data centered architecture model or an object/process oriented architecture model, could be determined and selected however, as a less qualified software architecture for an architecture model to be defaulted.

If, on the other hand, the process concerns, for example, the development of an online shopping app that is to be developed for general use by every smart phone user, further interesting requirements often arise during the use of the first versions. High safety requirements also usually arise, since both personal data and bank data are used.

If, on the basis of this scenario, the input parameters for the fuzzy-based control for the default of a software architecture for a process control software to be used within the context of this process to be controlled are determined by corresponding input and then weighted, output parameters are obtained as indicated in figures 5 to 19 by the dash-dotted lines contained therein,
and relating to the process environment for example:
   - Scope of project: low 1,0; medium 0,2;
   - Awareness of requirements: low 1,0;
   - Stability (extern): instable 1,0;
   - Documentation: low 1,0; medium 0,3;
   - Existing documentation: normal 0,4; high 1,0;
and relating to the process team for example:
   - Organization: medium 1,0; specific 0,5;
   - Spatial distribution: local 1,0;
   - Team experience: very high 0,1; high 1,0;
   - Team size: small 1,0; medium 0,3;
and relating to the process criticality for example:
   - Expert knowledge: interdisciplinary 0,3; medium 1,0;
   - Independence: dependent 1,0;
   - Economic criticality: medium 1,0;
   - Safety requirements: high 1,0; very high 0,25;

Based thereon, as the partial characteristic value representing the required flexibility an output value flexibility (fig. 19) is determined for example of medium 1,0 and as the partial characteristic value representing the complexity to be controlled an output value complexity (fig. 18) is determined for example being between medium 0,9 and complex 0,4.

Thus, as indicated in Fig. 20 by the dash-dotted box in the table, for the implementation of the exemplary specified project of an online shopping app, the software architecture based on a DCA -model is determined for the defaulted architecture model, i.e. a data centered architecture model is defaulted. Consequently, a software architecture is selected with a suitable architecture model to be defaulted for the process to be controlled, e.g. even for a software architecture to be used for a process control software controlling this process. Thus, the defaulted architecture model can be optimally adapted to the wide variety of data at the forefront of an online store, i.e. in particular the customer data through to various catalog data.

In particular, it is obvious from the two examples, i.e. "construction of the hall" and "online shopping app", that the properties of a process to be controlled, i.e. in particular for the execution or implementation of a project, especially for a specific product to be developed or produced, or its characteristics are determined by a series of framework conditions, which in turn are used as determining input parameters for the fuzzy control system. Such framework conditions can for example also be determined by the characteristics of the clients or stakeholders. After the input parameters have been inputted into or received by the fuzzy control system, the fuzzy control system can thus determine the software architecture having the appropriate architecture model for the default. The fuzzy control system is therefore available in particular as a software tool and a user should only have sufficient knowledge of the process to a certain extent in order to be able to determine the parameters. However, since it is a fuzzy logic, it can provide useful results even with fuzzy and imprecise parameter values. In particular, it is able to solve a multidimensional decision situation, where the dimensions of multiplicity, interdependence, diversity, dynamics and imponderability are appropriately considered based on the MIDDI approach, which are represented and linked with the linguistic variables. The requirement profiles for known software architectures are then represented in the characteristic values determined as output values. According to the linguistic variables, the different requirements to the software architectures and/or the architecture models can be divided consequently from very flexible to very static and/or very simple to very complex. The linking and defuzzification of the characteristic values then ultimately provides the specification for a software architecture or a basic architecture model, whereby the linking of the characteristic values and the defuzzification can be expediently carried out by means of a matrix. In particular, the characteristic values concerning flexibility and complexity clearly show how flexible and complex the software architecture or the architecture model must be designed in order to meet the project characteristics.

In summary, the application of the invention makes it possible for the first time to select a software architecture having the most suitable architecture model on the basis of incomplete and imprecise information, as well as various and competing parameters. For the selection of an optimal software architecture the characteristics of a process to be controlled, i.e. in particular of a project to be executed or implemented, can be considered in a special way, whereby the known software architectures can be classified for the first time also with respect to flexibility and complexity. In particular, a substantial advantage is seen in the possible classification of the software architectures as well as linking and evaluation of the parameters by the fuzzy control system, taking into account the characteristics and conditions of a process to be controlled, i.e. in particular of a project to be executed or implemented.

The invention therefore provides a tool for defaulting a respective, in particular process-depending, suitable architecture model on the basis of easily determined parameters, which can also be inaccurate on the basis of a project status.

If /process/project participants determine the framework conditions during the start of the process/project, the fuzzy control system can specify a most suitable software architecture that takes into account all known framework conditions.

After the parameters have been entered, the selection of the software architecture with the most suitable underlying architecture model to be specified or defaulted, in particular for a software to be used for a process to be controlled but even as architecture model to be used in another way for the process to be controlled, is fully automatic in practical implementation, whereby the fuzzy control system can additionally be adapted to specific framework conditions by changing or modifying the variables. Further software architectures or architecture models can also be included and thus taken into account after their corresponding classification.

## Claims

1. Method, in particular for defaulting by means of a computing device employing fuzzy-logic an architecture model to be used for a process to be controlled, in particular concerning the implementation or execution of a certain project, especially for a specific product to be developed or produced , the method comprising the steps of
- Storing a plurality of different specified process characteristic values in a computing device employing fuzzy-logic,
- Allocating in the computing device respective one software architecture to each of the different specified process characteristic values,
- Inputting a plurality of process parameters representing different process framework conditions of a process to be controlled into the computing device,
- Determining, by means of the computing device employing the fuzzy-logic, a target process characteristic value as a function of the process parameters on the basis of deposited fuzzy-sets describing linguistic variables, which subdivide each of the process framework conditions as a linguistic input variable into different classes, whereby a respective class allocation for each process parameter is determined by use of the fuzzy-logic and each of the process parameter is weighted as a function of the respective class allocation according to a set of control rules deposited within the computing device for the determination of the target process characteristic value,
- Selecting, by the computing device, from the plurality of software architectures a software architecture having the allocated specified process characteristic value being next to the determined target process characteristic value, in particular being identical to the determined target process characteristic value as architecture model to be defaulted for the use in the process to be controlled, in particular concerning the implementation or execution of a certain project, especially for a specific product to be developed or produced.

2. Method according to claim 1, wherein
furthermore for the determination of the target process characteristic value according to the set of control rules at least two different weightings are performed with regard to the weighting of each process parameter and consequently a first process partial characteristic value and at least one second process partial characteristic value are firstly determined, wherein for each determined process partial characteristic value an additional linguistic variable subdivided into different classes is provided and a respective class allocation for each of the process partial characteristic values is determined by employing the fuzzy-logic and each of the process partial characteristic values is again weighted as a function of the respective class allocation according to the set of control rules for the determination of the target process characteristic value.

3. Method according to claim 1 or 2, wherein
classifications of the software architectures made in advance concerning their characteristics, in particular including the manageable complexity and enabling flexibility, are graded by the specified process characteristic values and
a classification of the process to be controlled concerning the process requirements, in particular including the complexity to be managed and required flexibility, is performed by the set of control rules on the basis of the process framework conditions and graded by the determined target process characteristic value.

4. Method according to claim 1, 2 or 3, wherein
a process parameter of the plurality of process parameters is employed as a guiding value during the step of determining, and
in particular the set of control rules is adapted to the guiding value.

5. Method according to claim 4, wherein
the process parameter employed as the guiding value is either selected or predetermined within the computing device prior to the step of determining, and
in particular a process parameter representing a desired process result is employed wherein as the guiding value.

6. Fuzzy-control-system, in particular for defaulting an architecture model to be used for a process to be controlled, in particular concerning the implementation or execution of a certain project, especially for a specific product to be developed or produced, comprising
a computing device employing fuzzy-logic having fuzzy-sets describing linguistic variables dividing several process framework conditions as linguistic input variables into different classes, and a set of control rules deposited within the computing device, in particular an adaptable set of control rules,
- with the fuzzy control system being designed for storing a plurality of different specified process characteristic values in the computing device and for allocating in the computing device respective one software architecture to each of the different specified process characteristic values, and for receiving in the computing device a plurality of process parameters representing different process framework conditions of a process to be controlled, and
- with the fuzzy control system being furthermore designed for determining, by employing the fuzzy-logic, a target process characteristic value as a function of the process parameters, specifically by determining on the basis of the fuzzy-sets a respective class allocation for each process parameter and by weighting each of the process parameter as a function of the respective class allocation according to the set of control rules for the determination of the target process characteristic value, and
- with the fuzzy control system being furthermore designed for selecting from the plurality of software architectures a software architecture having the allocated specified process characteristic value being next to the determined target process characteristic value, in particular being identical to the determined target process characteristic value as architecture model to be defaulted for the use in the process to be controlled, in particular concerning the implementation or execution of a certain project, especially for a specific product to be developed or produced.

7. Fuzzy-control-system according to claim 6,
being for the determination of the target process characteristic value furthermore designed, for performing at least two different weightings with regard to the weighting of each process parameter and for consequently firstly determining a first process partial characteristic value and at least one second process partial characteristic value, wherein for each determined process partial characteristic value an additional linguistic variable subdivided into different classes is provided, and for determining, employing the fuzzy-logic, a respective class allocation for each of the process partial characteristic values and for again weighting each of the process partial characteristic values as a function of the respective class allocation according to the set of control rules for the determination of the target process characteristic value.

8. Fuzzy-control-system according to claim 6 or 7, being furthermore designed,
- in particular by using a first fuzzy-logic software application running in the fuzzy-logic employing computing device, for determining as a function of received process parameters representing process environment based process framework conditions, process team based process framework conditions and process criticality influencing process framework conditions a respective process environment related characteristic value (Pe-Cv), process team related characteristic value (Pt-Cv) and process criticality related characteristic value (Pc-Cv), and
being furthermore designed,
- in particular by using a second fuzzy-logic software application running in the fuzzy-logic employing computing device, for firstly determining as a function of the process environment related characteristic value (Pe-Cv), process team related characteristic value (Pt-Cv) and process criticality related characteristic value (Pc-Cv) a first process partial characteristic value representing the complexity of the process to be controlled and a second process partial characteristic value representing the flexibility required for the process to be controlled, and
being furthermore designed,
- in particular by using a third fuzzy-logic software application running in the fuzzy-logic employing computing device, for determining the target process characteristic value as a function of the first process partial characteristic value and second process partial characteristic value.

9. Fuzzy-control-system according to at least one of claims 6 to 8, being furthermore designed
- for employing a process parameter of the plurality of process parameters as a guiding value, and
being in particular designed
- for performing the determination supplementary based on the guiding value.

10. Fuzzy-control-system according to claim 9, being furthermore designed for automatically adapting the deposited set of control rules to the guiding value and/or having a selection unit for a selection of the process parameter as the guiding value.

11. Use of a fuzzy-control-system having a computing device employing fuzzy-logic having fuzzy-sets describing linguistic variables dividing several process framework conditions as linguistic input variables into different classes and having a set of control rules deposited, in particular an adaptable set of control rules, for performing a method according to at least one of claims 1 to 5.

12. Computer-readable medium comprising instructions which, when executed on a computer having at least one computing device employing fuzzy logic, cause the computing device to perform the steps of the method of any one of claims 1 to 5.

## Amended claims

### Amended claims in accordance with Rule 137(2) EPC.

1. Method, in particular for defaulting by means of a computing device employing fuzzy-logic an architecture model to be used for a process to be controlled, in particular concerning the implementation or execution of a certain project, especially for a specific product to be developed or produced, the method comprising the steps of
- Storing a plurality of different specified process characteristic values in a computing device employing fuzzy-logic,
- Allocating in the computing device respective one software architecture to each of the different specified process characteristic values,
- Inputting a plurality of process parameters representing different process framework conditions relating to process environment, process team and/or process criticality of a process to be controlled into the computing device,
- Determining, by means of the computing device employing the fuzzy-logic, a target process characteristic value as a function of the process parameters on the basis of deposited fuzzy-sets describing linguistic variables, which subdivide each of the process framework conditions as a linguistic input variable into different classes, whereby a respective class allocation for each process parameter is determined by use of the fuzzy-logic and each of the process parameter is weighted as a function of the respective class allocation according to a set of control rules deposited within the computing device for the determination of the target process characteristic value,
- Selecting, by the computing device, from the plurality of software architectures a software architecture having the allocated specified process characteristic value being next to the determined target process characteristic value, in particular being identical to the determined target process characteristic value as architecture model to be defaulted for the use in the process to be controlled, in particular concerning the implementation or execution of a certain project, especially for a specific product to be developed or produced,
wherein a process parameter of the plurality of process parameters is employed as a guiding value during the step of determining, and the set of control rules is adapted to the guiding value.

2. Method according to claim 1, wherein
furthermore for the determination of the target process characteristic value according to the set of control rules at least two different weightings are performed with regard to the weighting of each process parameter and consequently a first process partial characteristic value and at least one second process partial characteristic value are firstly determined, wherein for each determined process partial characteristic value an additional linguistic variable subdivided into different classes is provided and a respective class allocation for each of the process partial characteristic values is determined by employing the fuzzy-logic and each of the process partial characteristic values is again weighted as a function of the respective class allocation according to the set of control rules for the determination of the target process characteristic value.

3. Method according to claim 1 or 2, wherein
classifications of the software architectures made in advance concerning their characteristics, in particular including the manageable complexity and enabling flexibility, are graded by the specified process characteristic values and
a classification of the process to be controlled concerning the process requirements, in particular including the complexity to be managed and required flexibility, is performed by the set of control rules on the basis of the process framework conditions and graded by the determined target process characteristic value.

4. Method according to claim 1, 2 or 3, wherein
the process parameter employed as the guiding value is either selected or predetermined within the computing device prior to the step of determining, and
in particular a process parameter representing a desired process result is employed as the guiding value.

5. Fuzzy-control-system, in particular for defaulting an architecture model to be used for a process to be controlled, in particular concerning the implementation or execution of a certain project, especially for a specific product to be developed or produced, comprising
a computing device employing fuzzy-logic having fuzzy-sets describing linguistic variables dividing several process framework conditions relating to process environment, process team and/or process criticality as linguistic input variables into different classes, and a set of control rules deposited within the computing device, in particular an adaptable set of control rules,
- with the fuzzy control system being designed for storing a plurality of different specified process characteristic values in the computing device and for allocating in the computing device respective one software architecture to each of the different specified process characteristic values, and for receiving in the computing device a plurality of process parameters representing different process framework conditions of a process to be controlled, and
- with the fuzzy control system being furthermore designed for determining, by employing the fuzzy-logic, a target process characteristic value as a function of the process parameters, specifically by determining on the basis of the fuzzy-sets a respective class allocation for each process parameter and by weighting each of the process parameter as a function of the respective class allocation according to the set of control rules for the determination of the target process characteristic value, and
- with the fuzzy control system being furthermore designed for selecting from the plurality of software architectures a software architecture having the allocated specified process characteristic value being next to the determined target process characteristic value, in particular being identical to the determined target process characteristic value as architecture model to be defaulted for the use in the process to be controlled, in particular concerning the implementation or execution of a certain project, especially for a specific product to be developed or produced, and
- with the fuzzy control system being furthermore designed for employing a process parameter of the plurality of process parameters as a guiding value, and
being designed for performing the determination supplementary based on the guiding value.

6. Fuzzy-control-system according to claim 5,
being for the determination of the target process characteristic value furthermore designed, for performing at least two different weightings with regard to the weighting of each process parameter and for consequently firstly determining a first process partial characteristic value and at least one second process partial characteristic value, wherein for each determined process partial characteristic value an additional linguistic variable subdivided into different classes is provided, and for determining, employing the fuzzy-logic, a respective class allocation for each of the process partial characteristic values and for again weighting each of the process partial characteristic values as a function of the respective class allocation according to the set of control rules for the determination of the target process characteristic value.

7. Fuzzy-control-system according to claim 5 or 6, being furthermore designed,
- in particular by using a first fuzzy-logic software application running in the fuzzy-logic employing computing device, for determining as a function of received process parameters representing process environment based process framework conditions, process team based process framework conditions and process criticality influencing process framework conditions a respective process environment related characteristic value (Pe-Cv), process team related characteristic value (Pt-Cv) and process criticality related characteristic value (Pc-Cv), and
being furthermore designed,
- in particular by using a second fuzzy-logic software application running in the fuzzy-logic employing computing device, for firstly determining as a function of the process environment related characteristic value (Pe-Cv), process team related characteristic value (Pt-Cv) and process criticality related characteristic value (Pc-Cv) a first process partial characteristic value (Ppv-C) representing the complexity of the process to be controlled and a second process partial characteristic value (Ppv-F) representing the flexibility required for the process to be controlled, and
being furthermore designed,
- in particular by using a third fuzzy-logic software application running in the fuzzy-logic employing computing device, for determining the target process characteristic value as a function of the first process partial characteristic value (Ppv-C) and second process partial characteristic value (Ppv-F).

8. Fuzzy-control-system according to at least one of claims 5 to 7, being furthermore designed for automatically adapting the deposited set of control rules to the guiding value and/or having a selection unit for a selection of the process parameter as the guiding value.

9. Use of a fuzzy-control-system having a computing device employing fuzzy-logic having fuzzy-sets describing linguistic variables dividing several process framework conditions as linguistic input variables into different classes and having a set of control rules deposited, in particular an adaptable set of control rules, for performing a method according to at least one of claims 1 to 4.

10. Computer-readable medium comprising instructions which, when executed on a computer having at least one computing device employing fuzzy logic, cause the computing device to perform the steps of the method of any one of claims 1 to 4.
